# EUROPEAN PATENT SPECIFICATION

(11) **EP 2 172 528 B1**
(45) Date of publication and mention of the grant of the patent: **30.01.2013**
(21) Application number: 09171214.1
(22) Date of filing: 24.09.2009
(51) Int. Cl.: C09J 7/04

(54) **Double-Sided Pressure-Sensitive Adhesive Sheet and Method for Producing the Same**
Doppelseitige, druckempfindliche Klebefolie und Verfahren zu deren Herstellung
Feuille adhésive recto verso sensible à la pression et son procédé de fabrication

(30) Priority: 06.10.2008 JP 2008259447; 28.07.2009 JP 2009174990; 09.09.2009 JP 2009207770
(43) Date of publication of application: 07.04.2010
(73) Proprietor: NITTO DENKO CORPORATION, Ibaraki-shi, Osaka 567-8680 (JP)
(72) Inventor: Takahashi, Akiko, Ibaraki-shi Osaka 567-8680 (JP); Ikeya, Mami, Ibaraki-shi Osaka 567-8680 (JP)
(74) Representative: Grünecker, Kinkeldey, Stockmair & Schwanhäusser

(56) References cited:
- EP-A1- 1 887 063
- EP-A1- 2 053 110
- EP-A2- 1 930 387
- EP-A2- 1 990 388
- WO-A1-2009/031421
- WO-A1-2009/119220
- JP-A- 2006 143 856

## Description

### BACKGROUND OF THE INVENTION

### 1. Field of the Invention

The present invention relates to a double-sided pressure-sensitive adhesive (PSA) sheet comprising a nonwoven fabric substrate bearing a PSA layer formed from a PSA composition that is an emulsion, and further rotates to a method of producing this double-sided PSA sheet.

### 2. Description of the Related Art

Double -sided PSA sheet having a structure in which a PSA layer is disposed on each side of a nonwoven fabric (double-coated PSA sheet) is widely used in various industrial fields, for example, from household electrical products to automobiles and office automation equipment, as a bonding or attachment means that provides highly reliable adhesion with a good workability.

Against the backdrop of resource conservation, the post-consumer dismantling of manufactured articles and the re-utilization (recycling) of the recyclable components (parts) used therein and the constituent materials of these components has become prominent in recent years. In one procedure for re-utilizing a component - or a constituent material thereof - that is joined with another component using a double-sided PSA sheet, typically the joint due to the double-sided PSA sheet is first ruptured and the other component is separated from the component intended to be re-utilized (the "recyclable component"), after which the double-sided PSA sheet itself is separated (removed) from the component. In this sequence, when in the initial component break down (dismantling) step the double-sided PSA sheet undergoes rupture in the form of tearing in the thickness direction within the nonwoven fabric (interlaminar failure) or when a portion of the pressure-sensitive adhesive (adhesive residue) remains on the component surface after initial component break down or after separation of the double-sided PSA sheet itself, the efficiency of the recycle process is then substantially degraded by the step in which this residue is removed from the component surface. Japanese Patent Application Laid-open Nos. 2006-143856, 2001-152111, and 2000-265140 is art related to improving this circumstance (improving the removability).

EP-A-2053110 discloses a double-sided pressure-sensitive adhesive sheet comprising a pressure-sensitive adhesive layer formed by directly applying an aqueous dispersion-type pressure-sensitive adhesive composition to a nonwoven fabric substrate.

JP-A-2006-143856 discloses a method of manufacturing a double-sided adhesive sheet in which one or both sides of a nonwoven fabric substrate having a specific basis weight are impregnated with a liquid adhesive composition.

### SUMMARY OF THE INVENTION

Up to the present time, the PSA compositions used to form the PSA layer during the production of double-sided PSA sheet have primarily been solvent-based compositions in which the components constituting the PSA (e.g., polymer) are dissolved in organic solvent. However, out of concern for the environment and a desire to reduce the quantity of volatile organic compounds (VOCs) emitted from double-sided PSA sheet, a trend has appeared in the last few years of increasing preference for the use of water-dispersed (water-based) PSA compositions - in which the components constituting the PSA are dispersed in water.

However, double-sided PSA sheet that uses a water-based PSA composition has been prone to exhibit a less satisfactory removability than double-sided PSA sheet that uses a solvent-based PSA composition (residuals are prone to exhibit on the surfaces of parts). This has been one factor impeding the conversion from solvent-based PSA compositions to water-based PSA compositions in the field of double-sided PSA sheet (particularly double-sided PSA sheet used attached to a recyclable component).

An object of the present invention is to provide a method of producing a highly removable double-sided PSA sheet using a water-based PSA composition. Another object of the present invention is to provide the double-sided PSA sheet obtained by this method.

The following are typical examples of methods for disposing a PSA layer on a substrate, for example, a nonwoven fabric: methods in which the PSA composition is directly coated or applied on the substrate (direct coating methods, also referred to hereafter as "direct methods"); methods in which a PSA layer supported on a releasable surface (a release surface, for example, the surface of a release liner) - and typically a PSA layer that has been formed in advance by the application of a PSA composition to the release surface - is applied to a substrate and the PSA layer is thereby transferred to the substrate (transfer methods). The disposition of the PSA layer by bringing about a thorough penetration into the nonwoven fabric (substrate) is advantageous for preventing the previously described circumstance in which residues of the double-sided PSA sheet remain attached on surfaces after component break down, and the PSA composition is preferably thoroughly impregnated into the nonwoven fabric in the direct method in which a liquid PSA composition is directly coated on nonwoven fabric.

However, water-based (for example, emulsion types) PSA compositions generally exhibit a poorer penetrability into nonwoven fabric than solvent-based PSA compositions. The main cause of this is that water-based PSA compositions exhibit a higher surface tension than solvent-based PSA compositions.

The inventor carried out detailed investigations into the relationship between the properties of emulsion-type PSA compositions and the behavior during break down or rupture of double-sided PSA sheet that uses such a composition. It was discovered as a result that the previously described problems can be solved through a direct method that uses an emulsion-type PSA composition that satisfies specific conditions. The present invention was achieved based on this discovery.

The present invention provides a method of producing a double-sided PSA sheet that has a PSA layer on each side of a nonwoven fabric substrate. This method includes a step of preparing an emulsion-type PSA composition (PSA emulsion) that satisfies both of the following conditions: the viscosity at 30°C is 0.1 to 3 Pa - s and the solid content is 50 to 70 mass%. This method further comprises a step of forming a PSA layer by directly coating this PSA composition on at least one side of the nonwoven fabric.

Because this method comprises the direct application of a low-viscosity PSA composition as described above, the execution of this method can form a PSA layer in which this composition has undergone thorough penetration into the nonwoven fabric. When the solids content of a PSA composition is lowered excessively in service to lowering the viscosity of the composition, in connection with the use of nonwoven fabric (a porous material) as the substrate, bubbles are produced in large amounts when the composition is dried, which readily results in a loss of the surface condition (smoothness) of the PSA layer. This bubble production can cause a reduction in the properties (PSA characteristics, quality of appearance, and so forth) of the double-sided PSA sheet. The method of the present invention, because it employs a low-viscosity, high-solids PSA composition, can produce a double-sided PSA sheet that exhibits an improved removability (for example, the interlaminar failure is less likely to occur in the interlaminar failure test described below, or, put differently, peeling at the PSA layer/adherend interface is facilitated) and can do so while inhibiting effects on other properties. This method is also preferred from an environmental perspective because it uses a water-dispersed-type (emulsion type) PSA composition.

As used herein, "nonwoven fabric" is a concept that mainly denotes the nonwoven fabrics for PSA sheet service that are used in the field of PSA tapes and other PSA sheets and typically refers to nonwoven fabrics as fabricated using the usual papermaking machines (these are also referred to as "paper").

The method disclosed herein of producing double-sided PSA sheet is preferably executed according to an embodiment comprising a step of forming a first PSA layer (PSA layer formed by a transfer method) on a first side of the nonwoven fabric by laminating on this first side a transfer PSA layer that has been formed in advance on a release surface; and a step of forming a second PSA layer (PSA layer formed by a direct method) by directly applying the aforementioned PSA composition on the second side of the nonwoven fabric on which the first PSA layer has been formed. This production method (a transfer-direct method) can be applied to the production of double-sided PSA sheet employing a variety of nonwoven fabrics and can realize good productivities. For example, this production method is well suited to producing double-sided PSA sheet having a nonwoven fabric that is based on cellulosic material.

The transfer PSA layer resident on the release surface is preferably formed by coating an emulsion-type PSA composition on the release surface. A PSA composition having a viscosity at 30°C of at least 5 Pa · s is preferably used as the PSA composition to be coated on the release surface. Thus, the method disclosed herein can further comprise a step of coating the aforementioned release surface with a PSA composition that has a viscosity at 30°C of at least 5 Pa · s (typically 5 to 25 Pa · s) to thereby form the aforementioned transfer PSA layer on the release surface. In this manner, by using a low-viscosity PSA composition in the direct method and using a higher viscosity PSA composition for the PSA composition coated on the release sheet, a second PSA layer that has thoroughly penetrated into the nonwoven fabric (thus providing a good removability) can be formed in the direct method and a very uniform first PSA layer can be formed in the transfer method.

Nonwoven fabric having a thickness of 40 µm to 100 µm is preferably used as the nonwoven fabric in the methods disclosed herein. The methods of the present invention are preferably also applied to the production of double-sided PSA sheet that uses nonwoven fabric that has such a thickness and can form a double-sided PSA sheet that exhibits an excellent removability. The grammage of the nonwoven fabric is preferably at least 15 g/m² (for example, 15 to 30 g/m²). The tensile strength of the nonwoven fabric is preferably at least 10 to 50 N/5 mm in both the machine direction and transverse direction of the nonwoven fabric. The use is particularly preferred of nonwoven fabric that satisfies all of the preceding conditions on the thickness, grammage, machine direction tensile strength, and transverse direction tensile strength. The use of such a nonwoven fabric enables the realization of a double-sided PSA sheet that exhibits an even better removability (for example, the interlaminar failure is less likely to occur in the interlaminar failure test described below, or, put differently, peeling at the PSA layer/adherend interface is facilitated).

An emulsion-type PSA composition based on acrylic polymer (for example, a PSA composition obtained by emulsion polymerization) can preferably be used as the PSA composition that is directly applied on the nonwoven fabric (the direct-application PSA composition). An emulsion-type PSA composition based on acrylic polymer - which may be the same as or may differ from the direct-application PSA composition - can preferably be used as the PSA composition that is coated on the release surface (the transfer PSA composition).

The present invention also provides the double-sided PSA sheet produced by any of the methods disclosed herein. This PSA sheet exhibits an excellent removability as described above and is thus well suited for service attached to a recyclable component (for example, service in which another recyclable component or a disposable component is attached to the recyclable component).

### BRIEF DESCRIPTION OF THE DRAWINGS

Figure 1 is a cross-sectional diagram that schematically depicts an example of a typical structure of a double-sided PSA sheet;
Figure 2 is a cross-sectional diagram that schematically depicts an example of another typical structure of a double-sided PSA sheet;
Figure 3 is an explanatory diagram that schematically depicts an exemplary embodiment of the method of producing a double-sided PSA sheet;
Figure 4 is a cross-sectional diagram at the IV-IV line of Figure 3;
Figure 5 is a cross-sectional diagram at the V-V line of Figure 3;
Figure 6 is an explanatory diagram that illustrates the interlaminar failure test method;
Figure 7 is an explanatory diagram that illustrates the interlaminar failure test method;
Figure 8 is an explanatory diagram that illustrates the interlaminar failure test method; and
Figure 9 is an explanatory diagram that illustrates the interlaminar failure test method.

### DETAILED DESCRIPTION OF THE INVENTION

Preferred embodiments of the present invention are described below. Matter required to execute the present invention but outside the matter particularly mentioned in this Specification can be understood as design variation matter for the individual skilled in the art based on the conventional technology in the pertinent field. The present invention can be executed based on the contents of the disclosure in this Specification and the common general technical knowledge in the pertinent field.

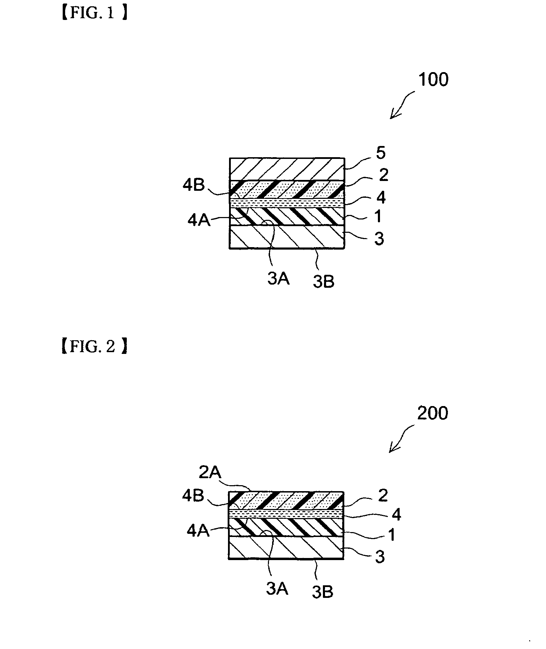

The double-sided PSA sheet (this can be a long strip such as tape) produced using the methods of the present invention can have, for example, the cross-sectional structure shown in Figure 1 or Figure 2.

The double-sided PSA sheet 100 shown in Figure 1 has a structure in which PSA layers 1, 2 are disposed on the two surfaces 4A, 4B of a nonwoven fabric 4 acting as substrate and in which release liners 3, 5, which have a release surface on at least their PSA layer sides, are respectively disposed on these PSA layers 1, 2. At least one of the PSA layers 1, 2 is a PSA layer formed by a direct method in which a PSA composition is directly coated on the nonwoven fabric 4 and dried. In a preferred embodiment, a first PSA layer 1 disposed on a first side 4A of the nonwoven fabric 4 is formed by a transfer method and the second PSA layer 2 disposed on the second side 4B is formed by a direct method. This transfer method can preferably be executed by an embodiment in which, for example, a PSA composition is coated and dried on a release surface 3A of the release liner 3 to form the PSA layer 1 on the release surface 3A and the PSA layer (transfer PSA layer) 1 supported on this release liner (transfer support) 3 is attached to the first side 4A of the nonwoven fabric 4 (the PSA layer 1 is transferred to the nonwoven fabric 4). The release liner 3 used in this transfer method can itself be utilized to protect the first PSA layer 1. After this, the double-sided PSA sheet 100 with the structure shown in Figure 1 can be produced by forming the second PSA layer 2 by directly coating and drying a PSA composition onto the second side 4B of the nonwoven fabric 4 and laminating the release liner 5 on the second PSA layer 2.

The double-sided PSA sheet 200 shown in Figure 2 has the same structure as the double-sided PSA sheet 100 shown in Figure 1, with the following exceptions: the release liner 3 disposed on the first PSA layer 1 is a release liner that exhibits releasability on both sides (that is, both sides are release surfaces); also, the release liner 5 that covers the second PSA layer 2 is not present. This type of double-sided PSA sheet 200 can provide a structure in which the second PSA layer 2 is also protected by the release liner 3 by winding up the PSA sheet 200 to abut the second PSA layer 2 against the release surface 3B on the back side (rear surface) of the release liner 3. For example, a double-sided PSA sheet 200 in which both PSA layers 1, 2 are protected by the release liner 3 can be made by attaching a PSA layer 1 (the transfer PSA layer) - which has been formed in advance on the release liner 3 - on the first side 4A of the nonwoven fabric 4; directly coating and drying a PSA composition on the second side 4B of the nonwoven fabric 4 to form the second PSA layer 2; and winding this into a roll to abut the upper side 2A of the second PSA layer 2 against the back side of the release liner 3.

The interfaces between the PSA layers 1, 2 and the nonwoven fabric 4 are shown by straight lines in Figures 1 and 2 for the sake of simplifying the illustration, but in actuality the lower region (nonwoven fabric side) of each PSA layer 1, 2 penetrates into the nonwoven fabric 4.

A preferred embodiment of the production of the double-sided PSA sheet 200 with the structure shown in Figure 2 using the methods disclosed herein will be described with reference to the drawings.

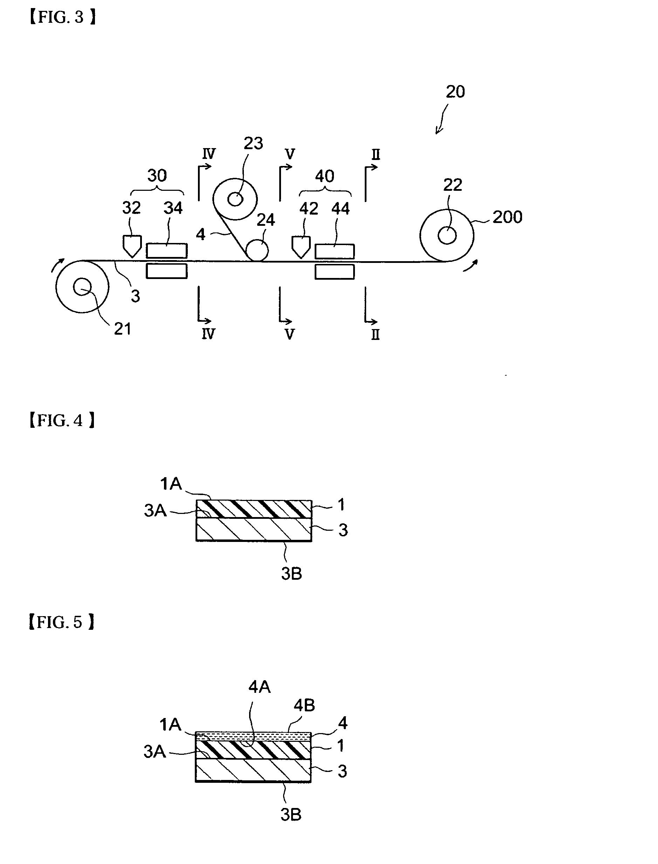

The double-sided PSA sheet production apparatus 20 shown in Figure 3 is provided with a first coating section 30 and a second coating section 40; an unwinding roll 21 and a wind-up roll 22 that cause the release liner 3 to advance through these coating sections 30, 40; and a substrate roll 23 that feeds the nonwoven fabric (substrate) 4 against the release liner 3 along the direction from the first coating section 30 toward the second coating section 40. The release liner 3 used here is a release liner in which both sides are constituted as release surfaces, that is, it is a double-sided release liner.

The release liner 3 played out from the unwinding roll 21 is first introduced into the first coating section 30. Considered sequentially from the upstream side, this first coating section 30 is provided with a coater 32 that applies a PSA composition to the release liner 3 and a dryer 34 that dries the applied composition. The thusly structured first coating section 30 forms a first PSA layer 1 on the one release surface 3A of the release liner 3 (refer to Figure 4). For example, this PSA composition (the transfer PSA composition) can preferably be a water-based emulsion-type PSA composition with the viscosity described below.

Then, the one side 4A of the substrate 4 played out from the substrate roll 23 is attached by means of a press roll 24 on the upper side 1A (outside surface when the PSA composition is applied) of the first PSA layer 1 formed on the release liner 3. A first PSA layer 1 is thus disposed on the first side 4A of the nonwoven fabric 4 (transfer method).

The release liner 3 on which the first PSA layer 1 and nonwoven fabric 4 are laminated (refer to Figure 5), is then introduced into the second coating section 40. Considered sequentially from the upstream side, the second coating section 40 is provided with a coater 42 that directly applies a PSA composition to the other side 4B of the nonwoven fabric 4 and with a dryer 44 that dries the applied composition. An emulsion-type PSA composition that satisfies the prescribed viscosity and solid content is used as this PSA composition (the direct-application PSA composition). The thusly structured second coating section 40 forms the second PSA layer 2 on the second side 4B of the nonwoven fabric 4 (direct method).

The thusly formed laminate (refer to Figure 2) is wound into roll form in such a manner that the other release surface 3B of the release liner 3 abuts against the upper side 2A of the second PSA layer 2. This yields a double-sided PSA sheet (product) 200 having a configuration in which the nonwoven fabric 4 bearing the PSA layers 1, 2 on both surfaces is wound into roll form with an interleaved release liner 3.

Figure 3 illustrates an example in which the double-sided PSA sheet is wound up with the second PSA layer 2 to the inside, but this laminate may also be wound up with the second PSA layer 2 to the outside.

In the art disclosed herein, a water-based emulsion-type PSA composition having a viscosity at 30°C (also referred to below simply as the "viscosity") of 0.1 to 3 Pa · s and a solids content (nonvolatile content) of 50 to 70 mass% is used as the PSA composition that is directly coated on the nonwoven fabric in the aforementioned direct method (the direct-application pressure-sensitive composition). This makes possible the production of a double-sided PSA sheet that exhibits an improved removability and that does so while avoiding effects on the other properties and the productivity.

Here, the viscosity of the PSA composition at 30°C refers to the viscosity measured at a rotation rate of 20 rpm using a BH-type viscometer at a sample (the PSA composition submitted to measurement) temperature of 30 ± 5°C. The rotor used for this measurement is selected from rotor types (numbers) appropriate for the sample viscosity. For the viscosity range of 0.1 to 3 Pa · s, the measurement is typically suitably carried out using a No. 2 or No. 3 rotor.

The solid content of the PSA composition refers to the mass percentage, with reference to the sample as a whole, for the residue present after the sample has been heated for 120 minutes at 130°C.

The penetration into the substrate (a nonwoven fabric in the case under consideration) is inadequate when the PSA composition used in the aforementioned direct method (the direct-application PSA composition) has an overly high viscosity, which impedes the manifestation of the effect of the present invention whereby the removability is improved by the formation of a PSA layer that has thoroughly penetrated into the substrate. A double-sided PSA sheet that exhibits an even higher removability can be produced by the use of a direct-application PSA composition that has a viscosity no greater than 2 Pa · s (for example, 0.5 to 2 Pa · s). Even better effects can be manifested by making the viscosity of the composition no greater than 1.5 Pa · s (for example, 0.5 to 1.5 Pa · s). From the standpoint of facilitating the provision (commercial acquisition, production, and so forth) of a high-solids (for example, 55 to 70 mass%) composition, a direct-application PSA composition having a viscosity of at least 0.5 Pa · s can preferably be used.

When the direct-application PSA composition has an excessively low solid content, bubbles are generated in large amounts when the PSA composition coated on the nonwoven fabric is dried, and the smoothness of the surface of the PSA layer is readily lost as a result. In addition, when the PSA composition used has a low solid content, the productivity for the double-sided PSA sheet is reduced because much time and energy is required to dry the PSA composition. The thickness of the PSA layer also tends to increase when a thick nonwoven fabric (for example, a thickness of at least 40 µm) is used for the substrate, and as a consequence the effects due to the use of a high-solids PSA composition can be expressed in a particularly prominent manner. From the standpoint of facilitating the provision (commercial acquisition, production, and so forth) of a low-viscosity composition, a PSA composition having a solid content of 50 to 65 mass% (for example 55 to 65 mass%) is preferred.

Various emulsion-type PSA compositions that satisfy the previously indicated viscosity and solid content can be suitably used as the direct-application PSA composition in the art disclosed herein. For examples, emulsion-type PSA compositions can be used as provided by dispersing in water any of various polymers capable of functioning as a PSA component (PSA polymers), for example, an acrylic, polyester, urethane, polyether, rubber, silicone, polyamide, fluorine, and so forth. Preferred thereamong is the use of acrylic-based emulsion-type PSA compositions.

A large average particle diameter and a broad particle size distribution for the PSA polymer particles comprising the emulsion are advantageous for building a high-solids, low-viscosity emulsion-type PSA composition. For example, a PSA composition is preferred that has an average particle diameter (median diameter) for the PSA polymer particles, as measured by laser diffraction/scattering using an "LS 13 320" particle distribution measurement instrument from Beckman Coulter, of 0.1 µm to 0.8 µm (preferably 0.2 µm to 0.5 µm). A PSA composition is preferred in which the standard deviation on the particle size distribution of the PSA polymer particles is 0.1 to 0.5.

There are no particular limitations on the PSA composition used in the aforementioned transfer method or on one of the surfaces of the nonwoven fabric used for this method, and, for example, an emulsion-type PSA composition (preferably an acrylic emulsion-type PSA composition) can be used comprising a dispersion in water of the same polymers as for the direct-application PSA composition. The viscosity of this transfer PSA composition may be a viscosity that enables the PSA layer (the transfer PSA layer) to be suitably formed on the release surface. Since release surfaces are generally highly water repellent, the transfer PSA composition to be coated on the release surface preferably has a somewhat high viscosity. For example, a transfer PSA composition having a viscosity (this refers to the viscosity measured in the same manner as for the PSA composition used in the direct method) of at least 3 Pa · s (more preferably at least 5 Pa s) can preferably be used. In addition, the viscosity of this composition is preferably no greater than 25 Pa · s (more preferably no greater than 20 Pa · s). When the viscosity of the transfer PSA composition is too low, holes may be produced in the PSA layer due to crawling and the thickness may become nonuniform. The coatability may be reduced when, on the other hand, the viscosity of the transfer PSA composition is too high. The solid content of the transfer PSA composition can be, for example, 30 to 70 mass% (preferably 40 to 65 mass%). As for the direct-application PSA composition, a transfer PSA composition having a solid content of 50 to 70 mass% (for example, 50 to 65 mass% and more preferably 55 to 65 mass%) can preferably be used.

The composition of the PSA layer-forming components (solid content) of the transfer PSA composition may be the same as or may differ from that of the direct-application PSA composition. For example, a transfer PSA composition and a direct-application PSA composition can preferably be used that have the same composition of PSA layer-forming components and that differ from each other only with regard to viscosity.

The viscosity of the PSA composition can be adjusted using known thickeners, diluents (these can be solvents such as water and so forth), and so forth. For PSA compositions whose viscosity changes with pH, the viscosity may be adjusted by exploiting this property. For example, in the case of a PSA composition based on an acrylic polymer produced by the copolymerization of acid group-containing monomer, the viscosity can be adjusted by the degree of neutralization (quantity of addition of a neutralizing agent such as aqueous ammonia).

A nonwoven fabric that is customary or well known in the field of double-sided PSA sheets or a nonwoven fabric other than this can preferably be used as the nonwoven fabric (substrate) in the art disclosed herein. The following, for example, are usable: nonwoven fabric constituted of natural fiber such as wood pulp, cotton, hemp (for example, Manila hemp), and so forth; nonwoven fabric constituted of chemical fiber (synthetic fiber) such as polyester fiber, rayon, vinylon, acetate fiber, polyvinyl alcohol (PVA) fiber, polyamide fiber, polyolefin fiber, polyurethane fiber, and so forth; and nonwoven fabric constructed using two or more fibers of different materials.

Nonwoven fabric more preferred for the present invention can be exemplified by nonwoven fabric in which the main constituent fiber is cellulosic fiber (including natural fibers and regenerated fibers such as rayon; typically natural fibers). Nonwoven fiber composed of such fiber can have both strength and a suitable flexibility. The use of such a nonwoven fabric as the substrate therefore enables the realization of a double-sided PSA sheet that exhibits an excellent removability as well as other adhesive properties at an excellent level (for example, rebound resistance). The proportion of the cellulosic fiber in the fiber constituting the nonwoven fabric is typically at least 50 mass%, preferably at least 70 mass%, and more preferably at least 85 mass%. In a preferred embodiment of the invention disclosed herein, nonwoven fabric in which the constituent fiber is substantially cellulosic fiber (for example, 100% hemp) is used as the nonwoven fabric.

The nonwoven fabric may be subjected to processing (typically an impregnation treatment) with a resin (binder) such as viscose, starch, PVA, polyacrylamide, and so forth. Viewed from the perspective of the strength of the nonwoven fabric (for example, the tensile strength), nonwoven fabric that has been subjected to a so-called viscose process (viscose impregnation process) can preferably be used. The "viscose" concept cited here includes the viscose material used as a binder or paper strengthener in the field of nonwoven fabrics (particularly the nonwoven fabrics employed as substrates for double-sided PSA sheet). The viscose material used in the viscose process (viscose impregnation process) in this field is a typical example encompassed by the viscose concept cited here.

Nonwoven fabric having a thickness of at least 40 µm (typically 40 µm to 100 µm and preferably 50 µm to 85 µm) can preferably be used as the aforementioned nonwoven fabric. It has been quite problematic with the prior methods of producing double-sided PSA sheet to provide a PSA layer that has thoroughly penetrated into the interior of nonwoven fabric having such a thickness, and as a consequence double-sided PSA sheet prepared using such a nonwoven fabric for the substrate has readily failed in the nonwoven fabric region (interlaminar failure) and/or a portion of the PSA layer has been prone to remain (adhesive residue) on the surface of the adherend. The methods of the present invention are also preferably used to produce double-sided PSA sheet that uses the relatively thick nonwoven fabric cited above and can form a double-sided PSA sheet in which the PSA layer has thoroughly penetrated into this nonwoven fabric (excellent removability). Accordingly, the effects from the use of the present invention can be manifested to an even greater degree in the production of double-sided PSA sheet that uses nonwoven fabric that has such a thickness. Nonwoven fabric having such a thickness is typically more resistant to shredding than thinner nonwoven fabric. Double-sided PSA sheet made using such a nonwoven fabric can therefore provide, for example, good workability during separation (peel off) of the double-sided PSA sheet itself from components after dismantling.

Nonwoven fabric having a grammage of at least 15 g/m² (typically 15 to 30 g/m²) can preferably be used as the nonwoven fabric in the herein disclosed art, although there is no particular limitation to this. The use of nonwoven fabric having a grammage of 15 to 20 g/m² enables the development of an even higher level of removability. The bulk density (calculated by dividing the grammage by the thickness) of the nonwoven fabric can be, for example, 0.2 to 0.4 g/cm³. Nonwoven fabric having such a bulk density is particularly well suited for the formation of a PSA layer that has thoroughly penetrated into the nonwoven fabric.

A high-strength nonwoven fabric is preferably used for the substrate from the standpoint of easy peeling and resistance to shredding when the double-sided PSA sheet is removed (in the case, for example, of peeling from a component surface post-disassembly by taking one end of the double-sided PSA sheet, the ability to continuously peel to the other end without shredding along the way). For example, the tensile strength as described in the examples, infra, is preferably at least 10 N/15 mm in both the machine direction (MD) and transverse direction (TD) and more preferably is at least 15 N/15 mm. While there are no particular limitations on the upper limit on the tensile strength, as a general matter the MD tensile strength and TD tensile strength are both preferably not greater than 50 N/15 mm based on a consideration of cost and adhesion to curved surfaces. For example, double-sided PSA sheet made using a nonwoven fabric substrate having an MD tensile strength and a TD tensile strength of 10 to 50 N/15 mm (more preferably 15 to 50 N/15 mm) is preferred. The use of nonwoven fabric that satisfies all of the previously discussed parameters, i.e., thickness, grammage, MD tensile strength, and TD tensile strength, is particularly preferred. A double-sided PSA sheet having a PSA layer on both surfaces of such a nonwoven fabric can realize the preferred degree of interfacial failure disclosed herein. In a more preferred embodiment, it can realize the herein disclosed preferred adhesive strength with respect to ABS in addition to realizing the aforementioned degree of interfacial failure.

A release liner can be used that is selected as appropriate from the customary or well known release liners in the field of double-sided PSA sheet. For example, a release liner that can be suitably used has a structure provided by the execution of a release treatment on the surface of a substrate. The substrate constituting such a release liner, i.e., the target for the release treatment, can be suitably selected from various types of resin films, papers, fabrics and textiles, rubber sheets, foamed sheets, metal foils, and composites of the preceding (for example, a sheet having a laminated structure comprising an olefin resin laminated on both sides of paper). The release treatment can be carried out by the usual methods using a known or customary release treatment agent (for example, a silicone-type, fluorine-type, or long-chain alkyl-type release treatment agent). In addition, a low-adhesion substrate, e.g., an olefm resin (for example, polyethylene, polypropylene, ethylene-propylene copolymer, polyethylene/polypropylene blend) or a fluoropolymer (e.g., polytetrafluoroethylene, polyvinylidene fluoride) may be used as the release liner without carrying out a release treatment on the surface of such a substrate. Alternatively, the release liner may be such a low-adhesion substrate on which a release treatment has been carried out.

The PSA composition can be applied using a known or customary coater, for example, a gravure roll coater, reverse roll coater, kiss roll coater, dip roll coater, bar coater, knife coater, spray coater, and so forth. The application rate for the PSA composition, although not particularly limited, can be an amount that forms, for example, a 20 µm to 150 µm (typically 40 µm to 100 µm) PSA layer when dried (that is, on a solids basis).

Viewed from the perspective of promoting crosslinking reactions and raising the production efficiency, drying of the PSA composition is preferably carried out with the application of heat. As a general matter, for example, a drying temperature of 40°C to 120°C is preferably used, although this will also depend on the nature of the material to be coated (porous substrate or process liner).

A water-based emulsion-type PSA composition based on acrylic polymer (i.e., the mass% of the acrylic polymer with reference to the nonvolatiles (solids) in the PSA composition exceeds 50 mass%) wherein the acrylic polymer is dispersed in water is an example of a PSA composition preferred for use in the herein disclosed art.

This acrylic polymer can be the polymer yielded by the polymerization (typically emulsion polymerization) of a starting monomer in which alkyl (meth)acrylate, i.e., the esters of (meth)acrylic acid with alkyl alcohols, is the main monomer (main constituent monomer). The alkyl (meth)acrylate comprising this starting monomer is preferably the (meth)acrylic acid ester of C₂₋₂₀ (more preferably C₄₋₁₀) alkyl alcohol. The alkyl group in such alkyl alcohols can be specifically exemplified by ethyl, propyl, isopropyl, butyl, isobutyl, pentyl, isopentyl, hexyl, heptyl, 2-ethylhexyl, isooctyl, isononyl, isodecyl, and so forth. Butyl (meth)acrylate and 2-ethylhexyl (meth)acrylate are particularly preferred examples of the alkyl (meth)acrylate.

In addition to the alkyl (meth)acrylate that is the main monomer, the aforementioned starting monomer can contain other monomer (copolymerization component) as an optional component. This "other monomer" can be a single selection or two or more selections from the various monomers that have the ability to copolymerize with the alkyl (meth)acrylate used here. For example, an ethylenically unsaturated monomer (functional group-containing monomer) can be used that has a single functional group or two or more functional groups selected from the group consisting of the carboxyl group, hydroxyl group, amino group, amide group, epoxy group, and alkoxysilyl group. The use is preferred thereamong of acrylic acid and/or methacrylic acid. This functional group-containing monomer is used as a constituent component of the starting monomer along with the alkyl (meth)acrylate that is the main monomer and is useful for the introduction of crosslinks into the acrylic polymer obtained from the starting monomer. The type of functional group-containing monomer and its content (copolymerization percentage) can be established as appropriate based on a consideration of, for example, the type and quantity of crosslinking agent used, the nature of the crosslinking reaction, and the desired degree of crosslinking (crosslink density).

The PSA composition used in the methods of the present invention can be obtained by submitting the previously described starting monomer to emulsion polymerization. The mode of emulsion polymerization here is not particularly limited, and, for example, emulsion polymerization can be carried out by suitable application of the various known monomer feed regimes, polymerization conditions (polymerization temperature, polymerization time, polymerization pressure, and so forth), and auxiliaries (polymerization initiator, surfactant, and so forth) using the same modes as heretofore known for the usual emulsion polymerizations. For example, the monomer feed regime can be a batch introduction regime in which the entire starting monomer is charged to the polymerization kettle at once or can be a continuous feed regime or a portionwise feed regime. All or a portion of the starting monomer may be mixed and emulsified with water in advance and this emulsion may be fed into the reactor. Continuous feed regimes and portionwise feed regimes are advantageous for obtaining an emulsion with a broad particle size distribution, wherein the use of continuous feed regimes is preferred therebetween. For example, an emulsion - prepared in advance by mixing and emulsifying all of the starting monomer with water - may be continuously fed into the reactor over 2 to 8 hours (preferably 3 to 5 hours).

The solid content in the output from emulsion polymerization (the acrylic polymer emulsion prior to the execution of steps such as neutralization and thickening) is preferably 50 to 70 mass%. In addition, the viscosity of this acrylic polymer emulsion is preferably 0.05 to 1 Pa · s (preferably 0.05 to 0.5 Pa · s, for example, 0.05 to 0.3 Pa · s). The use of such an acrylic polymer emulsion enables the facile preparation of an acrylic emulsion-type PSA composition that has a low viscosity and a high solid content.

A temperature of, for example, 20 to 100°C (typically 40 to 80°C) can be used as the polymerization temperature. The polymerization initiator can be exemplified by azo initiators, peroxide initiators, redox initiators, and so forth, but the polymerization initiator is not limited to these. The polymerization initiator can be used at, for example, 0.005 to 1 mass part per 100 mass parts starting monomer.

The following, for example, can be employed as the emulsifying agent (surfactant) used in the emulsion polymerization: anionic emulsifying agents such as sodium lauryl sulfate, ammonium lauryl sulfate, sodium dodecylbenzenesulfonate, and sodium polyoxyethylene lauryl sulfate, and nonionic emulsifying agents such as polyoxyethylene alkyl ethers and polyoxyethylene alkylphenyl ethers. A single such emulsifying agent may be used or two or more may be used in combination. The emulsifying agent can be used at, for example, 0.2 to 10 mass parts (preferably 0.5 to 5 mass parts) per 100 mass parts starting monomer.

The various heretofore known chain-transfer agents (also known as molecular weight regulators and degree of polymerization regulators) can be used on an optional basis in this polymerization. This chain-transfer agent can be a single selection or two or more selections from, for example, mercaptans such as dodecyl mercaptan (dodecanethiol), glycidyl mercaptan, 2-mercaptoethanol, and so forth. The use of dodecanethiol is preferred thereamong. The chain transfer agent can be used at, for example, 0.001 to 0.5 mass part per 100 mass parts starting monomer. Its use at 0.02 to 0.05 mass part is preferred.

The PSA composition used in the herein disclosed methods (preferably a water-based acrylic emulsion-type PSA composition) may optionally contain the usual crosslinking agents, for example, a crosslinking agent selected from carbodiimide crosslinking agents, hydrazine crosslinking agents, epoxy crosslinking agents, isocyanate crosslinking agents, oxazoline crosslinking agents, aziridine crosslinking agents, metal chelate crosslinking agents, silane coupling agents, and so forth. A single one of these crosslinking agents may be used or two or more may be used in combination.

The PSA composition may contain a tackifier. This tackifier can be, for example, a single selection or two or more selections from the various tackifying resins such as rosin resins, rosin derivative resins, petroleum resins, terpene resins, phenolic resins, ketone resins, and so forth. The tackifier can be incorporated at, for example, no more than 50 mass parts as nonvolatiles (solids) per 100 mass parts polymer component (for example, the acrylic polymer in the case of a water-based acrylic emulsion-type PSA composition). A suitable amount of incorporation is generally no more than 30 mass parts. The lower limit on the quantity of tackifier incorporation is not particularly limited, but as a general matter a good effect is obtained by the use of at least 1 mass part per 100 mass parts polymer component.

A single tackifier may be used or a combination of two or more tackifiers may be used. The use is particularly preferred of a tackifier emulsion that is a water-based dispersion (tackifier emulsion) of the tackifier dispersed in water and that substantially does not contain organic solvent. The use of a high solids (for example, at least 50 mass% and typically 50 to 70 mass%) tackifier emulsion is preferred in order to achieve a high solid content for the PSA composition prepared by incorporating a tackifier emulsion.

Commercially available tackifiers can be exemplified by Super Ester E-865, Super Ester E-865NT, Super Ester E-650, Super Ester E-786-60, Tamanol E-100, Tamanol E-200, Tamanol 803L, Pensel D-160, and Pensel KK, which are all trade names from Arakawa Chemical Industries, Ltd., and YS Polyster S, YS Polyster T, and Mightyace G, which are all trade names from Yasuhara Chemical Co., Ltd. But tackifiers are not limited to the above examples. To improve cohesion under high temperature environment, tackifiers having a softening point of at least 140°C (typically 140°C to 180°C) may be preferably employed.

The PSA composition may contain acid or base (e.g., aqueous ammonia), which is used to adjust the pH and/or adjust the viscosity. Other optional components that may be incorporated in this composition can be exemplified by the various usual additives in the field of water-based PSA compositions, e.g., viscosity regulators (thickeners, diluents, and so forth), leveling agents, plasticizers, fillers, colorants such as pigments and dyes, stabilizers, preservatives, and antioxidants. The heretofore known additives can be employed according to the usual methods, and a detailed description will not be provided here since these additives are not a particular characteristic feature of the present invention.

The herein disclosed art provides a double-sided PSA sheet that realizes a degree of interfacial failure of at least 50% (more preferably at least 60% and even more preferably at least 75%). The degree of interfacial failure is substantially 100% in a preferred embodiment of the double-sided PSA sheet. This degree of interfacial failure can be acquired through an interlaminar failure test in which two aluminum sheets are attached to the first and second PSA layers of the double-sided PSA sheet and, after holding for 24 hours at 60°C, a T-peel is carried out at a rate of 10 m/min.

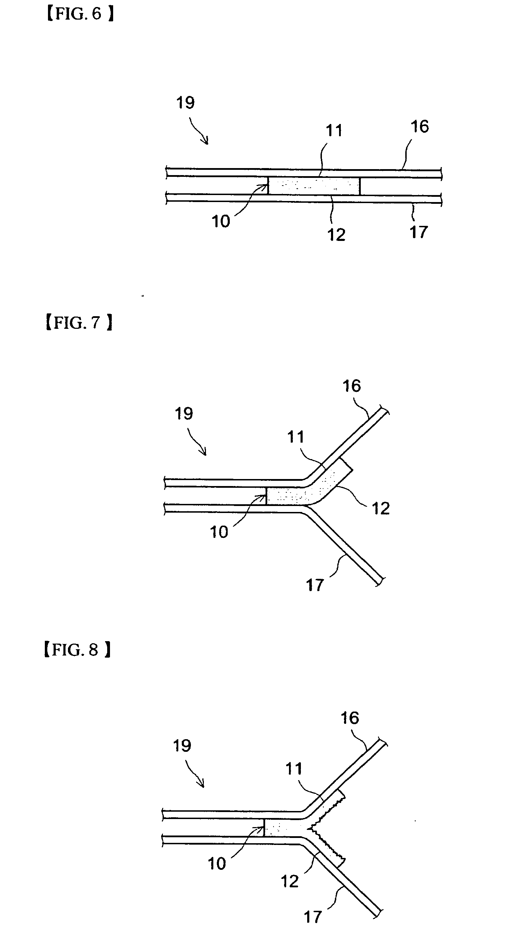

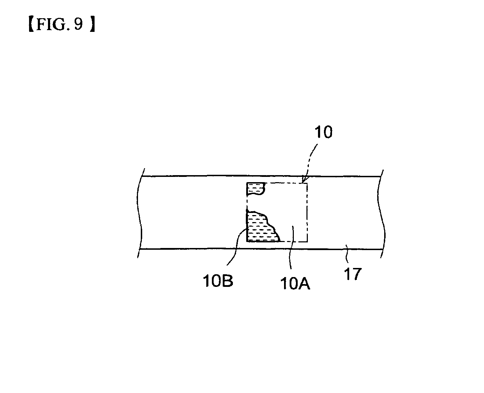

The previously cited interlaminar failure test will now be more particularly described with reference to the drawings. As shown in Figure 6, a sample 19 is fabricated by cutting the double-sided PSA sheet 10 to a size of 15 mm × 15 mm and pasting aluminum sheets 16, 17 (thickness = 0.1 mm, width = 20 mm, length = 100 mm) on, respectively, its first PSA layer 11 and second PSA layer 12. This sample 19 is held for 24 hours at 60°C and is then left to cool to ambient temperature. Then, as shown in Figures 7 and 8, the two ends of the aluminum sheets 16, 17 are gripped and a T-peel is performed at a peeling rate of approximately 10 m/minute (typically 10 ± 2 m/minute). Here, Figure 7 reports the state where the double-sided PSA sheet 10 peels at the interface between the second PSA layer 12 and the aluminum sheet 17, while Figure 8 shows the state where the double-sided PSA sheet 10 undergoes interlaminar failure. After the two aluminum sheets 16, 17 have been separated (peeled) in the described manner, the status of the tested double-sided PSA sheet 10 is visually inspected and the percentage for the area where peeling has occurred at the PSA layer/aluminum sheet interface (degree of interfacial failure) is determined. For example, as shown in Figure 9, in cases where after the T-peel the aluminum sheet 17 that was attached to the second PSA layer presents a region 10A where peeling occurred at the interface with the second PSA layer and a region 10B where the double-sided PSA sheet 10 underwent interlaminar failure, the degree of interfacial failure can be determined by calculating the percentage for the interfacial-peeling region 10A with reference to the area of attachment for the double-sided PSA sheet 10 (15 mm × 15 mm).

In a preferred embodiment of the double-sided PSA sheet provided by the herein disclosed art (this can be a double-sided PSA sheet produced by the methods disclosed herein), the double-sided PSA sheet satisfies at least one of the following adhesive properties:
(I) in the adhesive strength test performed by the method described in the examples that follow, both the first PSA layer and second PSA layer have an adhesive strength with respect to ABS of at least 10 N/20 mm (more preferably at least 11 N/20 mm and even more preferably at least 12 N/20 mm);
(II) in the holding strength test performed by the method described in the examples that follow, the sample does not fall off even when a 500 g load is applied and the sample is held for 1 hour at 80°C; and
(III) in the rebound resistance test performed by the method described in the examples that follow, the rise height of the sample edge is less than 5 mm.

Preferably at least property (I) is satisfied; more preferably at least two of properties (I), (II), and (III) are satisfied; and particularly preferably all of these properties are satisfied. The preferred embodiments of the herein disclosed art can realize a double-sided PSA sheet that exhibits high adhesive properties (for example, a strong adhesive strength) as well as an excellent removability.

A double-sided PSA sheet that exhibits the above-described preferred degree of interfacial failure (and more preferably that also exhibits the above-described preferred adhesive properties, for example, the adhesive strength with respect to ABS) can be favorably produced by employing any of the herein disclosed production methods in use of a nonwoven fabric substrate that satisfies the previously described preferred thickness, grammage, MD tensile strength, and TD tensile strength.

### EXAMPLES

Examples relating to the present invention are described below, but the present invention is not to be understood as being limited to what is shown in these specific examples. In the description that follows, "parts" and "%" are on a mass basis unless specifically noted otherwise.

The evaluated items in the following description were measured or evaluated as follows.

### Viscosity

The temperature of the sample was adjusted to 30 ± 5°C using a water bath and the viscosity was measured at 20 rpm using a BH-type viscometer from TOKIMEC Inc.

### Solid content

An approximately 1 g sample was introduced into an aluminum cup; drying was carried out for 120 minutes at 130°C; and the mass percentage for the residue was then determined.

The PSA compositions used to produce the double-sided PSA sheets were themselves prepared as follows.

### PSA composition A 1

0.1 part 2,2'-azobis[N-(2-carboxyethyl)-2-methylpropionamidine] hydrate (polymerization initiator, VA-057 (trade name) was used, product of Wako Pure Chemical Industries, Ltd.) and 32 parts ion-exchanged water were introduced into a reactor equipped with a condenser, nitrogen inlet tube, thermometer, and stirrer and stirring was then performed for 1 hour while introducing nitrogen gas. While holding this at 60°C, an emulsion polymerization reaction was run by the gradual dropwise addition to the reactor over 4 hours of an emulsified mixture (the starting monomer emulsion) prepared by the addition of 29 parts butyl acrylate, 67 parts 2-ethylhexyl acrylate, 1.4 parts acrylic acid, 2.4 parts methacrylic acid, 0.02 part 3-methacryloxypropyltrimethoxysilane (KBM-503 (trade name) was used, product of Shin-Etsu Chemical Co., Ltd.), and 0.033 part dodecanethiol (chain transfer agent) to 34 parts ion-exchanged water, and 2 parts polyoxyethylene sodium lauryl sulfate (emulsifier). After the completion of dropwise addition of the starting monomer emulsion, maturation was performed by holding at the same temperature for an additional 3 hours. Proceeding in this manner, an acrylic polymer emulsion (emulsion E1) was obtained. The viscosity of emulsion E1 was 0.19 Pa · s (measurement was performed using a No. 2 rotor). The mass-average molecular weight of the acrylic polymer present in emulsion E1 was 71.1 × 10⁴. This acrylic polymer had an ethyl acetate insoluble content (gel fraction) of 48%. The average particle size (median diameter measured using a model "LS 13 320" particle distribution measurement instrument from Beckman Coulter) of emulsion E1 was 0.267 µm.

The pH was adjusted to 6.0 by the addition of 10% aqueous ammonia to emulsion E1, thus yielding emulsion E2. This emulsion E2 had a viscosity of 0.12 Pa · s (using a No. 2 rotor) and had a solid content of 57.8%.

PSA composition A1 was prepared by adding the following to this emulsion E2, expressed per 100 parts of the acrylic polymer present in emulsion E2: 20 parts as solids of a tackifier (emulsion of polymerized rosin resin having a softening point of 160°C, trade name: Super Ester E-865NT, product of Arakawa Chemical Industries, Ltd.), 0.38 part as solids of a thickener (trade name: Aron B-500, product of TOAGOSEI Co., Ltd.), and 0.1 part as ammonia (NH₃) 10% aqueous ammonia. This composition A1 had a viscosity of 1.1 Pa · s (using a No. 3 rotor) and a solid content of 56.0%.

### PSA composition A2

PSA composition A2 was prepared in the same manner as for composition A1, but in this case changing the quantity of thickener addition to 0.5 part as solids. Composition A2 had a viscosity of 1.8 Pa · s (using a No. 3 rotor) and a solid content of 56.1 %.

### PSA composition A3

PSA composition A3 was prepared in the same manner as for composition A1, but in this case changing the quantity of thickener addition to 0.58 part as solids. Composition A3 had a viscosity of 2.6 Pa · s (using a No. 3 rotor) and a solid content of 56.0%.

### PSA composition A4

PSA composition A4 was prepared in the same manner as for composition A1, but in this case changing the quantity of thickener addition to 1 part as solids. Composition A4 had a viscosity of 10 Pa · s (using a No. 4 rotor) and a solid content of 55.9%.

The properties of these PSA compositions A1 to A4 are shown in Table 1.

**Table 1.**

| | A1 | A2 | A3 | A4 |
|---|---|---|---|---|
| viscosity [Pa · s] | 1.1 | 1.8 | 2.6 | 10 |
| Solid content [%] | 56.0 | 56.1 | 56.0 | 55.9 |

The following nonwoven fabrics were used in the examples given below.
nonwoven fabric B 1: nonwoven fabric comprising 100% hemp that has been subjected to a viscose impregnation process, trade name: F-18, product of Nippon Daishowa Paperboard Co., Ltd.
nonwoven fabric B2: nonwoven fabric comprising 100% hemp that has been subjected to a viscose impregnation process, trade name: F-23, product of Nippon Daishowa Paperboard Co., Ltd.
nonwoven fabric B3: nonwoven fabric comprising 100% hemp, trade name: SY-23, product of Nippon Daishowa Paperboard Co., Ltd.

The composition and properties of these nonwoven fabrics B1 to B3 are shown in Table 2.

**Table 2.**

| designation: | | B1 | B2 | B3 |
|---|---|---|---|---|
| grammage [g/m²] | | 18 | 23.6 | 22.6 |
| thickness [µm] | | 60 | 81 | 76 |
| density [g/cm³] | | 0.30 | 0.29 | 0.30 |
| tensile strength [N/15 mm] | MD | 26.0 | 28.3 | 8.8 |
| | TD | 19.0 | 21.5 | 8.8 |
| elongation [%] | MD | 2.1 | 2.1 | 2.2 |
| | TD | 4.4 | 4.2 | 1.9 |
| fiber composition | | 100% hemp | 100% hemp | 100% hemp |
| viscose processing | | yes | yes | no |

The tensile strength of each nonwoven fabric was measured as follows. Proceeding in such a manner that the machine direction of the nonwoven fabric corresponded to the longitudinal direction, the nonwoven fabric was cut into a strip with a width of 15 mm and this was employed as the sample. The sample was installed in a tensile tester (distance between chucks = 180 mm) and the tensile strength [N/15 mm] in the machine direction (MD) of the nonwoven fabric was measured based on JIS P 8113. The tensile strength [N/15 mm] of the nonwoven fabric in the transverse direction (TD) was measured in the same manner using a sample prepared by cutting the nonwoven fabric into a 15 mm-wide strip with the width direction of the nonwoven fabric corresponding to the longitudinal direction. The elongation of each nonwoven fabric in the MD and TD was also measured based on JIS P 8113.

Double-sided PSA sheets were produced using the previously described PSA compositions and nonwoven fabrics.

### Example I

Two sheets of release liner were provided; this release liner had been made by laminating polyethylene resin on both sides of high-quality paper followed by treatment with a silicone-based release agent. PSA composition A4 was coated on one sheet of the release liner and drying was then carried out for 2 minutes at 100°C to form an approximately 60 µm-thick PSA layer on the release liner. This PSA layer-bearing release liner was pasted on the first side of the nonwoven fabric B 1 (substrate), thereby disposing a PSA layer (the first PSA layer) on the first side by the transfer method. After this assembly, the release liner (transfer sheet) was then used to protect the first PSA layer.

The PSA composition A1 was subsequently coated, in an amount that provided a dry film thickness of 60 µm, on the second side of the nonwoven fabric; drying for 2 minutes at 100°C formed a PSA layer (second PSA layer) on the second side by the direct method. The second sheet of the release liner was laminated on this second PSA layer. The double-sided PSA sheet according to Example 1 was thus obtained.

### Examples 2 and 3

Double-sided PSA sheets according to Examples 2 and 3 were prepared as in Example 1, with the exception that, as the PSA composition used to form the second PSA layer by the direct method (direct-application PSA composition), composition A2 was used in Example 2 rather than composition A1 and composition A3 was used in Example 3 rather than composition A1.

### Examples 4 to 6

Double-sided PSA sheets according to Examples 4 to 6 were prepared by proceeding as in Examples 1 to 3, but in these cases using nonwoven fabric B2 as the substrate rather than nonwoven fabric B1. Thus, composition A1 was used as the direct-application PSA composition in Example 4, while Example 5 used composition A2 and Example 6 used composition A3.

### Examples 7 to 9

Double-sided PSA sheets according to Examples 7 to 9 were prepared by proceeding as in Examples 1 to 3, but in these cases using nonwoven fabric B3 as the substrate rather than nonwoven fabric B1. Thus, composition A1 was used as the direct-application PSA composition in Example 7, while Example 8 used composition A2 and Example 9 used composition A3.

### Examples 10 to 12

Nonwoven fabric B 1 was used as the substrate in Example 10; nonwoven fabric B2 was used as the substrate in Example 11; nonwoven fabric B3 was used as the substrate in Example 12; and in each instance composition A4 was used as the direct-application PSA composition. Double-sided PSA sheets according to Examples 10 to 12 were otherwise prepared as in Example 1.

Evaluation samples were prepared by holding the obtained double-sided PSA sheets for 3 days at 50°C and the evaluation tests described below were performed. The results are shown in Table 3 along with a summarized structure for the double-sided PSA sheet used in the particular example (the nonwoven fabric used, the viscosity of the PSA composition used to form the PSA layer on each side). A PSA sample was also prepared as follows: the previously described PSA layer-bearing release liner was not pasted on a nonwoven fabric and the second release liner sheet was laminated on this PSA layer; the assembly was held for 3 days at 50°C; and the PSA sample was then collected from the PSA layer. Measurement of the ethyl acetate insolubles (gel fraction) on this PSA sample provided a value of 42.0%.

### Interlaminar failure test

Interlaminar failure testing was performed by the previously described method. Thus, the sample was fabricated by cutting the double-sided PSA sheet to a size of 15 mm × 15 mm and pasting an aluminum sheet (thickness = 0.1 mm, width = 20 mm, length = 100 mm) on the first PSA layer and the second PSA layer. The sample was held for 24 hours at 60°C and was then left to cool to ambient temperature. The two ends of the aluminum sheets were manually gripped and a T-peel was performed manually at a peeling rate of approximately 10 m/minute. After the two aluminum sheets had been separated (peeled) in the manner described, the status of the tested double-sided PSA sheet was visually inspected and the percentage for the area where peeling had occurred at the PSA layer/aluminum sheet interface (degree of interfacial failure) was determined.

### Adhesive residue

The release liner covering the second PSA layer (PSA layer formed by the direct method) in the double-sided PSA sheet was peeled off followed by backing by pasting on a 25 µm-thick PET film. The thusly backed PSA sheet was cut to a size of width 20 mm x length 100 mm to provide the sample. The release liner covering the first PSA layer (PSA layer formed by the transfer method) was peeled off and the sample was pasted on an adherend of ABS panel (acrylonitrile-butadiene-styrene copolymer resin panel). After holding this for 14 days at 60°C, the sample was subjected to a manual 180° peel at a peel rate of about 1000 mm/minute and the presence/absence of adhesive residue on the surface of the ABS panel was visually scored.

**Table 3.**

| | nonwoven fabric | viscosity [Pa · s] | | degree of interfacial failure [%] | adhesive residue |
|---|---|---|---|---|---|
| | | transfer method (first side) | direct method (second side) | | |
| Ex. 1 | B1 | 10 | 1.1 | 100 | no |
| Ex. 2 | | 10 | 1.8 | 100 | no |
| Ex. 3 | | 10 | 2.6 | 100 | no |
| Ex. 4 | B2 | 10 | 1.1 | 85 | no |
| Ex. 5 | | 10 | 1.8 | 75 | no |
| Ex. 6 | | 10 | 2.6 | 65 | no |
| Ex. 7 | B3 | 10 | 1.1 | 75 | no |
| Ex. 8 | | 10 | 1.8 | 70 | no |
| Ex. 9 | | 10 | 2.6 | 50 | no |
| Ex. 10 | B1 | 10 | 10 | 0 | yes |
| Ex. 11 | B2 | 10 | 10 | 0 | yes |
| Ex. 12 | B3 | 10 | 10 | 0 | yes |

As is shown in Table 3, in Examples 10 to 12, which employed as their substrates nonwoven fabrics B 1 to B3 having thicknesses of at least 40 µm (more specifically thicknesses of 60 µm to 85 µm) and which employed a composition having a viscosity of 10 Pa · s as the direct-application PSA composition, the entire area of the tested double-sided PSA sheet underwent interlaminar failure (0% degree of interfacial failure) in the previously described interlaminar failure test. Thus, in these examples, residues of the PSA sheet were adhered on both of the peeled aluminum sheets over the entire area of the tested double-sided PSA sheet. Adhesive residue was also seen on the surface of the adherend (ABS panel) in the previously described adhesive residue test with the double-sided PSA sheets of Examples 10 to 12.

In contrast to this, Examples 1 to 9, which employed compositions having viscosities no greater than 3 Pa · s (more specifically, 0.5 to 3 Pa · s) as the direct-application PSA composition, all exhibited a substantially better removability than Examples 10 to 12. Thus, the double-sided PSA sheets according to Examples 1 to 9 in all instances achieved a degree of interfacial failure of 50% or more in the interlaminar failure test, and in no instance was adhesive residue seen on the ABS panel. Moreover, in Examples 4 to 9, which employed nonwoven fabric B2 or B3, a trend was seen wherein the degree of interfacial failure rose as the viscosity of the direct-application PSA composition declined in the range of 0.5 to 3 Pa · s. For all the nonwoven fabrics used, a degree of interfacial failure of at least 70% was achieved in the examples that used composition A1 or A2 (viscosity = 0.5 to 2 Pa · s) as the direct-application PSA composition and an even higher degree of interfacial failure (at least 75%) was achieved in the examples that used composition A1 (viscosity = 0.5 to 1 Pa · s) as the direct-application PSA composition. In a comparison of the examples that used direct-application PSA compositions having the same viscosity, the use of nonwoven fabrics B1 and B2 - which had increased penetrabilities due to the viscose process - was seen to provide a higher degree of interfacial failure (improved removability) than the corresponding example that used nonwoven fabric B3. Particularly good results were obtained in Examples 1 to 3, which employed nonwoven fabric B1 - which had been subjected to the viscose process and which had a grammage of 15 to 20 g/m².

The following evaluation tests were also run on the double-sided PSA sheets (evaluation samples) according to Examples 1 to 12. The results are shown in Table 4 along with a summarized structure for the double-sided PSA sheet used in the particular example.

### Adhesive strength

The release liner covering one side (the first PSA layer or the second PSA layer) of the double-sided PSA sheet was peeled off followed by backing by pasting on a 25 µm-thick polyethylene terephthalate (PET) film. The thusly backed PSA sheet was cut to a size of width 20 mm × length 100 mm to provide the sample. The release liner covering the other side of the sample was peeled off and the sample was press-bonded on an ABS panel adherend using 1 back-and-forth excursion with a 2 kg roller. After holding this for 30 minutes at 23°C, the adhesive strength (N/20 mm width) was measured based on JIS Z 0237 by carrying out a 180° peel at a pull rate of 300 mm/minute using a tensile tester in a measurement ambient of 23°C/50% relative humidity.

### Holding strength

The release liner covering one side (the first PSA layer or the second PSA layer) of the double-sided PSA sheet was peeled off followed by backing by pasting on a 25 µm-thick PET film. The thusly backed PSA sheet was cut to a size of width 10 mm × length 100 mm to provide the sample. The release liner covering the other side of the sample was peeled off and the sample was press-bonded over a bonding area of width 10 mm × length 20 mm on a phenolic resin panel adherend using 1 back-and-forth excursion with a 2 kg roller. This phenolic resin panel was hung in an 80°C ambient and, after standing for 30 minutes, a 500 g load was applied to the free end of the sample and the amount of sample slippage (distance) was measured according to JIS Z 0237 after holding for 1 hour in the 80°C ambient with the load attached.

### Rebound resistance

The release liner covering the second PSA layer (PSA layer formed by the direct method) of the double-sided PSA sheet was peeled off and the sample was prepared by pasting this on an aluminum sheet (thickness 0.5 mm × width 10 mm × length 90 mm). The long direction of this sample was bent into an arc over a round bar of φ 50 mm; the release liner covering the first PSA layer (PSA layer formed by the transfer method) was then peeled off; and press-bonding to a polypropylene panel was performed using a laminator. This was held for 24 hours in a 23 °C ambient and then for 2 hours at 70°C, after which the height (mm) by which the sample edge had risen up from the polypropylene panel surface was measured. This measurement was run using 3 samples (that is, n = 3) and their average value was calculated.

**Table 4.**

| | non-woven fabric | viscosity [Pa · s] | | adhesive strength [N/20 mm] | | holding strength [mm] | | re-bound resistance [mm] |
|---|---|---|---|---|---|---|---|---|
| | | transfer method (1st side) | direct method (2nd side) | 1st side | 2nd side | 1st side | 2nd side | |
| Ex. 1 | B1 | 10 | 1.1 | 12.6 | 11.8 | 3.0 | 0.8 | 1.5 |
| Ex. 2 | | 10 | 1.8 | 13.5 | 12.4 | 1.8 | 0.3 | 2.2 |
| Ex. 3 | | 10 | 2.6 | 13.7 | 12.5 | 0.8 | 0.3 | 3.6 |
| Ex. 4 | B2 | 10 | 1.1 | 12.9 | 12.1 | 2.7 | 0.3 | 1.6 |
| Ex. 5 | | 10 | 1.8 | 13.1 | 12.7 | 1.4 | 0.5 | 2.5 |
| Ex. 6 | | 10 | 2.6 | 13.8 | 13.1 | 1.1 | 0.5 | 4.6 |
| Ex. 7 | B3 | 10 | 1.1 | 12.8 | 11.9 | 1.5 | 0.6 | 5.0 |
| Ex. 8 | | 10 | 1.8 | 13.1 | 12.6 | 1.0 | 0.4 | 5.8 |
| Ex.9 | | 10 | 2.6 | 14.0 | 13.3 | 0.8 | 0.3 | 6.8 |
| Ex. 10 | B1 | 10 | 10 | 13.3 | 12.3 | 0.7 | 0.6 | 0.5 |
| Ex. 11 | B2 | 10 | 10 | 13.3 | 13 | 1.3 | 1.5 | 1.7 |
| Ex. 12 | B3 | 10 | 10 | 13 | 12.8 | 1.1 | 1.4 | 8.4 |

As is shown in Table 4, the double-sided PSA sheets according to Examples 1 to 9 all exhibited an excellent adhesive performance (adhesive strength, holding strength, rebound resistance) generally the same as the adhesive performance of the double-sided PSA sheets according to Examples 10 to 12. With regard to the rebound resistance, a trend was seen in the viscosity range of 0.5 to 3 Pa · s in which the rebound resistance was further increased by the use of a lower viscosity composition. This result is presumed to be related to an increase in substrate penetrability brought about by a lowering of the viscosity of the direct-application composition.

As has been described in the preceding, the double-sided PSA sheet disclosed herein and the double-sided PSA sheet produced using the art disclosed herein exhibit an excellent removability as described above and as a consequence are well suited - in the fields of household electrical products, automobiles, office automation equipment, and various other industrial and commercial fields - for service attached to components for which recycling is intended (including recycling in component form and recycling of the constituent materials of the components); this service can be exemplified by the attachment of another recyclable component or a disposable component to the recyclable component. In addition, the double-sided PSA sheet disclosed herein, because it can also be provided with excellent adhesive properties, is not limited to recyclable components and is well suited for use in various fields.

## Claims

1. A method of producing a double-sided pressure-sensitive adhesive sheet that has a pressure-sensitive adhesive layer on each side of a nonwoven fabric substrate, the method comprising the steps of:
preparing an emulsion-type pressure-sensitive adhesive composition that has a viscosity at 30°C of 0.1 to 3 Pa · s determined according to the method described in the description and a solid content of 50 to 70 mass% determined according to the method described in the description; and
coating directly at least one side of the nonwoven fabric with the pressure-sensitive adhesive composition to form a pressure-sensitive adhesive layer.

2. The method according to claim 1, further comprising a step of laminating, on a first side of the nonwoven fabric, a transfer pressure-sensitive adhesive layer that has been formed in advance on a release surface, to thereby form a first pressure-sensitive adhesive layer on the first side, wherein
after the step of forming the first pressure-sensitive adhesive layer, the second side of the nonwoven fabric is directly coated with the pressure-sensitive adhesive composition to form a second pressure-sensitive adhesive layer.

3. The method according to claim 2, further comprising a step of coating a release surface with an emulsion-type pressure-sensitive adhesive composition having a viscosity at 30°C of 5 to 25 Pa · s determined according to the method described in the description to form the transfer pressure-sensitive adhesive layer on the release surface.

4. The method according to claim 1 or 2, wherein the nonwoven fabric has all of the following characteristics:
(A) a grammage of at least 15 g/m²;
(B) a tensile strength determined according to the method described in the description in a machine direction and in a transverse direction of at least 10 to 50 N/15 mm; and
(C) a thickness of 40 µm to 100 µm.

5. A double-sided pressure-sensitive adhesive sheet produced by the method according to any one of claims 1 to 4.

## Patentansprüche

1. Verfahren zum Herstellen einer doppelseitigen Haftklebefolie, welche eine Haftklebstoffschicht auf jeder Seite eines Faservliessubstrats aufweist, wobei das Verfahren die Schritte umfasst:
das Herstellen einer Haftklebstoffzusammensetzung vom Emulsionstyp, welche eine Viskosität bei 30 °C von 0,1 bis 3 Pa•s, bestimmt gemäß dem in der Beschreibung beschriebenen Verfahren, und einen Feststoffgehalt von 50 bis 70 Massenprozent, bestimmt gemäß dem in der Beschreibung beschriebenen Verfahren, aufweist; und
das direkte Beschichten von wenigstens einer Seite des Faservlieses mit der Haftklebstoffzusammensetzung, um eine Haftklebstoffschicht zu bilden.

2. Verfahren nach Anspruch 1, außerdem umfassend einen Schritt des Laminierens einer Transferhaftklebstoffschicht, welche im Voraus auf einer Trennmitteloberfläche gebildet worden ist, auf eine erste Seite des Faservlieses, um dadurch eine erste Haftklebstoffschicht auf der ersten Seite zu bilden, wobei
nach dem Schritt des Bildens der ersten Haftklebstoffschicht die zweite Seite des Faservlieses direkt mit der Haftklebstoffzusammensetzung beschichtet wird, um eine zweite Haftklebstoffschicht zu bilden.

3. Verfahren nach Anspruch 2, außerdem umfassend einen Schritt des Beschichtens einer Trennmitteloberfläche mit einer Haftklebstoffzusammensetzung vom Emulsionstyp mit einer Viskosität bei 30 °C von 5 bis 25 Pa•s, bestimmt gemäß dem in der Beschreibung beschriebenen Verfahren, um die Transferhaftklebstoffschicht auf der Trennmitteloberfläche zu bilden.

4. Verfahren nach Anspruch 1 oder 2, wobei das Faservlies alle der folgenden Merkmale aufweist:
(A) ein Flächengewicht von wenigstens 15 g/m²;
(B) eine Zugfestigkeit, bestimmt gemäß dem in der Beschreibung beschriebenen Verfahren, in einer Maschinenrichtung und in einer Querrichtung von wenigstens 10 bis 50 N/15 mm; und
(C) eine Dicke von 40 µm bis 100 µm.

5. Doppelseitige Haftklebefolie, hergestellt durch das Verfahren nach einem der Ansprüche 1 bis 4.

## Revendications

1. Procédé de production d'une feuille adhésive double face sensible à la pression, qui présente une couche adhésive sensible à la pression de chaque côté d'un substrat de tissu non tissé, le procédé comprenant les étapes :
de préparation d'une composition adhésive de type émulsion sensible à la pression, qui présente une viscosité à 30 °C de 0,1 à 3 Pa.s déterminée d'après le procédé décrit dans la description, et une teneur en matières solides de 50 à 70 % en masse déterminée d'après le procédé décrit dans la description ; et
de revêtement direct d'au moins un côté du tissu non tissé, avec la composition adhésive sensible à la pression pour former une couche adhésive sensible à la pression.

2. Procédé selon la revendication 1, comprenant en outre une étape de laminage, sur un premier côté du tissu non tissé, d'une couche adhésive de transfert sensible à la pression qui a été formée au préalable sur une surface de décollement, pour ainsi former une première couche adhésive sensible à la pression sur le premier côté, dans lequel
après l'étape de formation de la première couche adhésive sensible à la pression, le second côté du tissu non tissé est directement revêtu avec la composition adhésive sensible à la pression pour former une seconde couche adhésive sensible à la pression.

3. Procédé selon la revendication 2, comprenant en outre une étape de revêtement d'une surface de décollement d'une composition adhésive de type émulsion sensible à la pression, présentant une viscosité à 30 °C de 5 à 25 Pa.s déterminée d'après le procédé décrit dans la description, pour former la couche adhésive de transfert sensible à la pression sur la surface de décollement.

4. Procédé selon la revendication 1 ou 2, dans lequel le tissu non tissé présente toutes les caractéristiques suivantes :
(A) un grammage d'au moins 15 g/m² ;
(B) une résistance à la traction, déterminée d'après le procédé décrit dans la description, dans un sens machine et dans un sens transversal d'au moins 10 à 50 N/15 mm ; et
(C) une épaisseur de 40 µm à 100 µm.

5. Feuille adhésive double face sensible à la pression produite par le procédé selon l'une quelconque des revendications 1 à 4.
